# EUROPEAN PATENT APPLICATION

(11) **EP 2 327 913 A1**
(43) Date of publication of application: **01.06.2011**
(21) Application number: 09177474.5
(22) Date of filing: 30.11.2009
(51) Int. Cl.: F16L 1/20, F16L 1/24

(54) **Floatation device**

(71) Applicant: H.J. Wiefferink B.V., 7575 CA Oldenzaal (NL)
(72) Inventor: Nieuwmeijer, Martin Gerard Bernhard, 7576 WD Oldenzaal (NL)
(74) Representative: 't Jong, Bastiaan Jacob

(57) **Abstract**

The invention relates to a floatation device (1) for providing buoyancy to a pipe (7), the floatation device comprising a flexible sheet (2) having at least two opposite free ends (3,4) and at least one floating element (5) arranged to a first free end of the flexible sheet, wherein the flexible sheet is arrangable in a U-shaped loop such that in use the flexible sheet is arranged in a U-shaped loop, in which a pipe is suspended and the floating element is arranged over the pipe.

## Description

The invention relates to a floatation device for providing buoyancy to a pipe.

For laying pipelines on the sea bed it is known to have a ship on which a plurality of pipe segments are present. The pipeline is assembled on the ship by welding pipe segments to each other and the assembled pipeline part is directly submerged into the sea.

This method of laying pipelines is subject to weather conditions. If the sea is too rough, the assembling of the pipeline has to be stopped and the risk is present, that the already assembled pipeline part is damaged.

From EP 1104525 it is known to assemble the pipeline on land, provide the pipeline with floatation devices and coil the pipeline in a bay, which is less subject to the weather conditions. When the pipeline is completed and the weather forecast is good, the coiled pipeline is transported to sea. Then the pipeline is uncoiled, while during the uncoiling the floatation devices are removed from the pipeline, to submerge the uncoiled pipeline part.

US 3992735 discloses a flotation device for the above mentioned pipeline laying method. The device according to this publication is an inflatable ring, which envelopes the pipe in inflated state and cannot be removed easily from the pipe in this state. Only after deflating the ring, the device can be removed. In order to reuse the inflatable floatation devices, the deflated rings has to collected immediately, in order to avoid the rings to sink to the bottom of the sea.

Another disadvantage of the inflatable rings is that the floatation device is arranged along the full circumference of the pipe. When coiling the pipeline provided with these inflatable rings, the distance between adjacent pipeline parts is determined by twice the thickness of such an inflatable ring.

Accordingly, it is an object of the invention to provide a floatation device, which reduces or eliminates the above mentioned disadvantages.

This object is achieved by a floatation device according to the invention, which floatation device comprises a flexible sheet having at least two opposite free ends and at least one floating element arranged to a first free end of the flexible sheet, wherein the flexible sheet is arrangable in a U-shaped loop such that in use the flexible sheet is arranged in a U-shaped loop, in which a pipe is suspended and the floating element is arranged over the pipe.

With the floatation device according to the invention, the floating element is arranged above the pipe, such that in a coiled state, the pipeline parts can be arranged closer to each other.

The pipeline is with a floatation device according to the invention suspended in the U-shaped loop of the flexible sheet. The floating element is arranged to one free end of the flexible sheet. When the other free end of the flexible sheet is released the pipeline can sink to the bottom of the sea, while the floatation device will remain at the surface of the sea.

In an embodiment of the floatation device according to the invention, the second free end is connectable to the first free end to provide the U-shaped loop. The second free end can for example be connected to the first free end by a lockable connection, such that during transport of a coiled pipeline, the connection is locked and when the floatation device should be removed to sink the pipeline, the connection can be unlocked, such that the second free end is disconnected from the first free end.

A preferred embodiment of the floatation device according to the invention comprises at least two floating elements, wherein the floating elements are each arranged at one free end of the flexible sheet, such that in use the pipe is suspended in the U-shaped loop of the flexible sheet and that both floating elements are arranged over the pipe.

As the floating elements are arranged during use above the pipe, a stable state is achieved, even though both floating elements are not additionally connected to each other. The pipe will be suspended between the two floating elements.

When the floatation device must be removed from the pipe, the floatation device can be shifted along the pipe, or one of the floating elements may be pushed under the pipe, such that both floating elements move to the same side of the pipe and the pipe is freed from the U-shaped loop.

Preferably, the floatation device comprises coupling means for coupling the free ends of the flexible sheet. The coupling means could for example comprise a staple, which can be stuck into the flexible sheet and / or the at least one floating element. The advantage of using a staple being stuck into the flexible sheet and / or the at least one floating element, is that the staple can easily be removed just by pulling the staple out of the floatation device. This is especially of advantage when automating the removal of the floatation devices from a coiled pipeline.

In another preferred embodiment of the floatation device according to the invention, the at least one floating element is wider than the width of the pipe to be suspended. This ensures that adjacent pipeline parts will not contact each other directly in coiled state. This ensures that the outer surface of the pipeline and any coating is not damaged, before the pipeline is submerged.

In yet another embodiment of the floatation device according to the invention the at least one floating element comprises a foamed plastic, for example expanded polystyrene foam (EPS). EPS elements provide a substantial buoyancy and the costs of such elements are relatively low.

In still another embodiment of the flotation device according to the invention the flexible sheet is a fabric coated with a plastic, for example polyvinylchloride (PVC), thermoplastic polyurethane (TPU) or a TPU blend. Such a fabric, which is typically used for covers on lorries, is strong and can withstand the influences of the sea and salt water.

These and other features of the invention will be elucidated in conjunction with the accompanying drawings.
Figure 1 shows a perspective view of a first embodiment of a floatation device according to the invention.
Figure 2 shows a perspective view of a second embodiment of a floatation device according to the invention.
Figure 3 shows a side view of a ship laying a pipeline using the floatation device of figure 2.
Figure 4 shows a cross sectional view of part of a coiled pipeline with floatation devices according to figure 2.

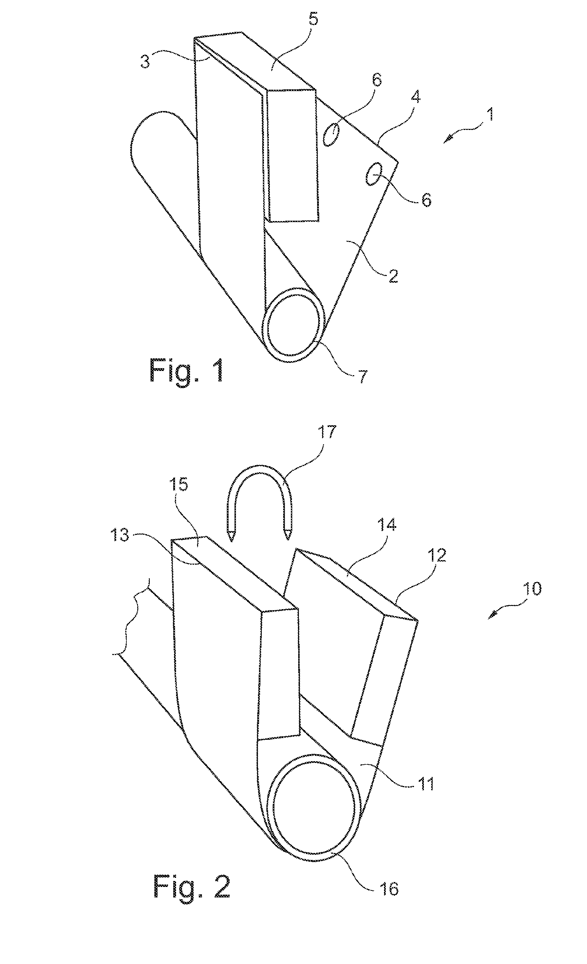

Figure 1 shows a first embodiment of a floatation device 1 according to the invention. This floatation device 1 has a flexible sheet 2, which is bent into a U-shape. The flexible sheet 2 has two parallel free ends 3, 4. At the first free end 3 a floating element 5 is arranged. This floating element 5 is preferably made of EPS.

The other free end 4 is provided with loops 6, which can connect to the floating element 5, such that the pipe 7 is enveloped by the flexible sheet 2.

Figure 2 shows a second embodiment 10 of a floatation device according to the invention. This embodiment 10 has a flexible sheet 11 with two parallel free ends 12, 13. Floating blocks 14, 15 are arranged to the free ends 12, 13 respectively.

The flexible sheet 11 is bent into a U-shape, such that the pipe 16 can be suspended in the flexible sheet 11 between the two floating blocks 14, 15.

When this floatation device 10 is put in water with a pipe 16 suspended by the U-shaped flexible sheet 11, the two floating blocks 14, 15 will move towards each other, enclosing the pipe 16. In order to ensure that both blocks 14, 15 are kept together at all time, a staple 17 is stuck into both floating blocks 14, 15 to keep them together.

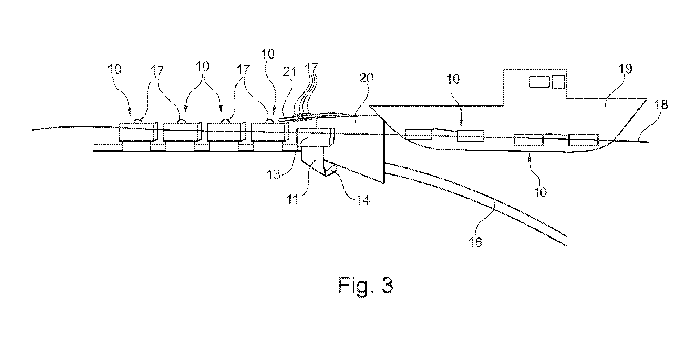

In figure 3 the method of submerging a pipe 16 is shown as described in EP 1104525 using floatation devices 10 according to the invention. The pipe 16 is assembled on shore and put in the sea 18 with floatation devices 10.

A platform or ship 19 has a device 20 for removing the floatation devices 10 such that the pipe 16 can be submerged to the bottom of the sea 18. The device 20 is only shown and explained schematically.

The device 20 comprises a pole 21, with which the staples 17 are removed from the floatation devices 10. The body of the device 20 is pushed by the ship 19 between both floating elements 13, 14. Due to the shape of the body of the device 20, one of the floating elements 14 is forced under water and under the pipe 16, such that both floating elements 13, 14 are moved to one side of the pipe 16 freeing the pipe 16, such that it can sink to the bottom to the sea 18.

The removed floatation devices 10 keep floating freely at the surface of the sea 18 and can be collected later.

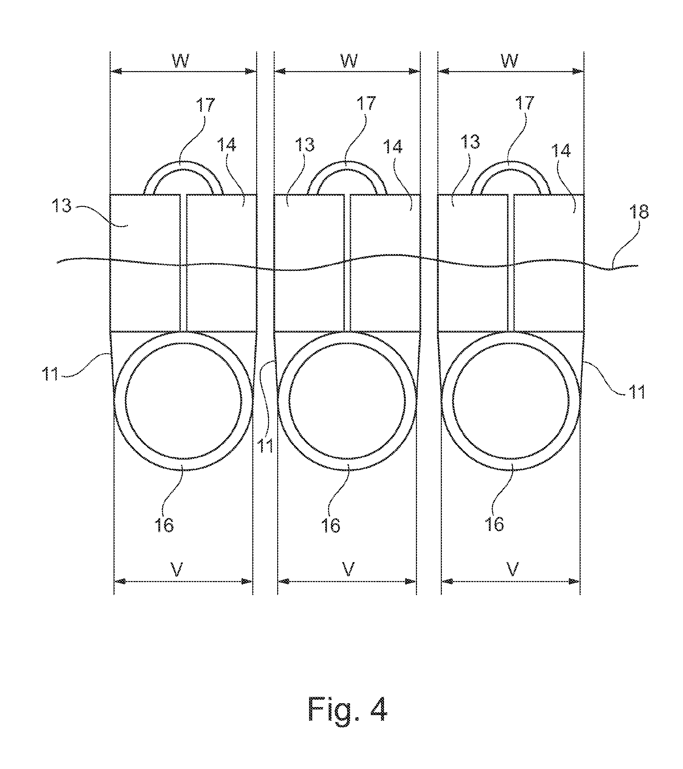

Figure 4 shows a cross sectional view of the pipe 16 in coiled state. The pipe 16 is suspended in the U-shaped flexible sheet 11. The floating elements 13, 14 are positioned above the pipe 16 as a result of the difference in buoyancy between the floating elements 13, 14 and the pipe 16. The floating elements 13, 14 are kept together by staples 17.

As clear from figure 4, the width W of the floating elements 13, 14 is larger than the width V of the pipe 16. As a result the adjacent pipes 16 will not contact each other when in coiled state.

## Claims

1. Floatation device for providing buoyancy to a pipe, the floatation device comprising a flexible sheet having at least two opposite free ends and at least one floating element arranged to a first free end of the flexible sheet, wherein the flexible sheet is arrangable in a U-shaped loop such that in use the flexible sheet is arranged in a U-shaped loop, in which a pipe is suspended and the floating element is arranged over the pipe.

2. Floatation device according to claim 1, wherein the second free end is connectable to the first free end to provide the U-shaped loop.

3. Floatation device according to claim 1 or 2, comprising at least two floating elements, wherein the floating elements are each arranged at one free end of the flexible sheet, such that in use the pipe is suspended in the U-shaped loop of the flexible sheet and that both floating elements are arranged over the pipe.

4. Floatation device according to any of the preceding claims, comprising coupling means for coupling the free ends of the flexible sheet.

5. Floatation device according to claim 4, wherein the coupling means comprise a staple, which can be stuck into the flexible sheet and / or the at least one floating element.

6. Floatation device according to any of the preceding claims, wherein the at least one floating element is wider than the width of the pipe to be suspended.

7. Floatation device according to any of the preceding claims, wherein the at least one floating element comprises a foamed plastic, for example expanded polystyrene foam (EPS)

8. Flotation device according to any of the preceding claims, wherein the flexible sheet is a fabric coated with a plastic, for example polyvinylchloride (PVC), thermoplastic polyurethane (TPU) or a TPU blend.
